# EUROPEAN PATENT APPLICATION

(11) **EP 1 255 186 A2**
(43) Date of publication of application: **06.11.2002**
(21) Application number: 02006361.6
(22) Date of filing: 21.03.2002
(51) Int. Cl.: G06F 3/033, G06F 17/30, G06F 3/147

(54) **Web browser user interface for low-resolution displays**

(30) Priority: 30.04.2001 US 845818
(71) Applicant: Nokia Corporation, 02150 Espoo (FI)
(72) Inventor: Vaajala, Kristian, 02150 Espoo (FI); Suutari, Jari, 02150 Espoo (FI); Takaluoma, Antti, 02150 Espoo (FI); Inkinen, Jukka Pekka, 02150 Espoo (FI); Carlsen, Sten, 02150 Espoo (FI); Kuuluvainen, Ilkka, 02150 Espoo (FI)
(74) Representative: Leson, Thomas Johannes Alois, Dipl.-Ing.

(57) **Abstract**

Graphical information having a full extent not displayable at once on a low-resolution display of a hand-held electronic device is displayed over a limited extent thereof at a variable resolution less than or equal to the highest resolution inherently available within the graphical information. The varying portion of the full image to be displayed is selected by a user windowing signal actuated by a user input device such as a button, roller, joystick or by simply moving the hand-held electronic device in space and having that movement sensed by a sensor such as an accelerometer.

## Description

### 1. Technical Field

The present invention relates to the presentation of images on low-resolution displays of hand-held electronic devices and, more particularly, to methods for displaying graphical information on such a display.

### 2. Discussion of Related Art

Portable electronic devices such as mobile telephones and personal digital assistance are becoming ubiquitous and are increasingly incorporating evermore powerful functionalities. An obstacle to achieving such high functionalities is that the size of the display has an extent limited by the size of the electronic device. Likewise, graphical information which can easily be displayed on a desktop computer display for instance cannot easily be displayed over its full extent as an image in a window of such a small-sized display. Moreover, such graphical information may have a given resolution available over its full extent that is not displayable at that given resolution in such a small window and in a display having a low-resolution generally. Even if such a small sized display were to have very high resolution the whole extent of the graphical information would not be viewable at once since it would be too tiny for the human eye to resolve.

### DISCLOSURE OF INVENTION

An object of the present invention is to provide a user interface for low-resolution displays which will enable high resolution viewing graphical information on a low-resolution display.

According to first and second aspects of the present invention, method and apparatus are provided for displaying graphical information on a display of an electronic device sized for hand-held use, the display providing an image in a window having an extent limited by the size of the electronic device, wherein a user-actuated input windowing signal is input by a user of the electronic device to a user input device within the electronic device, the windowing signal having a magnitude indicative of a selected whole or portion of an extent of the graphical information greater than displayable at once as said image over the limited extent of the window, and, in response to the user actuated input windowing signal, providing a display signal to the display of the electronic device for displaying the selected whole or portion of the extent of the graphical information on the limited extent window of the display.

In further accord with the first and second aspects of the present invention, the graphical information has given resolution available over the extent of the graphical information and wherein the step of displaying the whole or portion of the extent of the graphical information is at a resolution less than or equal to the given resolution.

In still further accord with the first and second aspects of the present invention, an input zoom signal is received by the user input device as actuated by the user of the electronic device, the input zoom signal having a magnitude indicative of a selected level of resolution, wherein the graphical information has a given resolution available over the extent of the graphical information greater than displayable at once in the window and wherein the selected level of resolution is displayed over a portion of the extent of the graphical information.

Still further in accord with the first and second aspects of the present invention, a stationary pointer is displayed on the limited extent window for use in selecting a hyperlink in its vicinity. The user may enter a link selection signal for selecting the hyperlink. When the stationary pointer is in the vicinity of the link, it can be made to change color or shape or can be made visible only when the link is positioned in the vicinity of the stationary pointer. The stationary pointer can be positioned in a central position within the limited extent window.

According to third and fourth aspects of the present invention, method and apparatus are provided for displaying graphical information on a limited extent display of a hand-holdable electronic device wherein inputs actuated by a user to indicate various selected levels of detail are received by a user input device which in turn provides a windowing signal having a magnitude indicative of a selected whole or portion of an extent of the graphical information greater than displayable at once as the image over the limited extent of the window, and wherein the windowing signal is processed by a signal processor for providing a display signal for displaying the selected whole or portion of the extent of the graphical information on the limited extent window.

In further accord with the third and fourth aspects of the present invention, a user actuatable pointer is displayed at a selected position within the limited extent display when a hyperlink is positioned at the selected position within the limited extent display. The user may then enter a link selection signal for selecting the hyperlink. The stationary pointer can be made to change color or shape when the hyperlink is positioned at the selected position so as to indicate to the user that a user-entered link selection signal can be entered for selecting the link. The stationary pointer can be displayed only when the link is positioned in the vicinity of the stationary pointer. The stationary pointer can be positioned in a central position within the limited extent window of the display.

According to the various aspects of the present invention, the input windowing signal may be provided in response to the user actuating a finger-or hand-actuated user input device. The finger- or hand-actuated user input device could be a button or buttons, key or keys, one or more finger-actuatable rollers, one or more joysticks, or the like. Voice commands could be used. Object or tag detection could be used. The input windowing signal could be provided in response to the user moving the electronic device itself. The moving could include moving the device with changing velocity sensible by a movement sensor or sensors.

These and other objects, features and advantages of the present invention will become more apparent in light of the detailed description of a best mode embodiment thereof, as illustrated in the accompanying drawings.
Fig. 1 shows a web page displayed over its full extent on a low-resolution display such as the display of a hand-held electronic device.
Fig. 2 shows control buttons for such an electronic device for controlling access to the web page in a window of the low-resolution display.
Fig. 3 shows a framed area of the web page of Fig. 1 that can be enlarged by depressing the select-key button of Fig. 2.
Fig. 4 shows a selection area that can be shown by inverting the gray scale or colors.
Fig. 5 shows another web page with 176 by 148 pixels with the selection area inverted.
Fig. 6 shows the selection area of Fig. 5 moved one step right.
Fig. 7 shows the selection area of Fig. 6 moved one step down.
Fig. 8 shows the selection area of Fig. 5 increased on step.
Fig. 9 shows a web page viewed in a wide window format (176 by 130 pixels).
Fig. 10 shows the same web page of Fig. 9 except viewed in a narrow window (176 by 208).
Fig. 11 shows a web page rotated 90 degrees with a resolution of 176 by 196.
Fig. 12 shows a magnifying glass being used as an aid in viewing portions of a detailed street map having an extent greater than comfortably viewable at once with the magnifying glass.
Fig. 13 shows an application of the present invention which uses an approach similar to Fig. 12, except using a hand-held electronic device in place of the magnifying glass and without any real map, but rather graphical information stored in a computer readable medium, the portion of which to be viewed is accessed according to user inputs, in this case sensed movements of the hand-held electronic device.
Fig. 14 shows the street map displayed over its entire extent with the low resolution available in the limited-extent display of the hand-held device while the right hand side of Fig. 14 shows a portion of the street map displayed with the resolution available on the hand-held device display whereby details can be discerned in the right hand part of the figure but not on the left.
Fig. 15 shows an application of the invention wherein menus are viewed.
Fig. 16 shows a hand-held electronic device with a user input device such as a button, key, roller, joystick or a motion sensor connected to a signal processor which is in turn connected to a display, according to the present invention.
Fig. 17 shows a series of steps which may be carried out in the hand-held electronic device of Fig. 16, which steps may be encoded in a sequence of program steps for execution by the signal processor of Fig. 16.

### BEST MODE FOR CARRYING OUT THE INVENTION

The following description of a method for displaying graphical information on a display of an electronic device sized for hand-held use is shown in the context of a user interface of a web browser for use with a low-resolution color display. The example shown in the following description are focused on use with such a color display with a resolution of for instance 176 by 208 pixels. However, it will be understood that the present invention is not restricted to a web browser or to a color display of the type described. The user interface of a present invention can be used for all kinds of low-resolution displays and in different contexts.

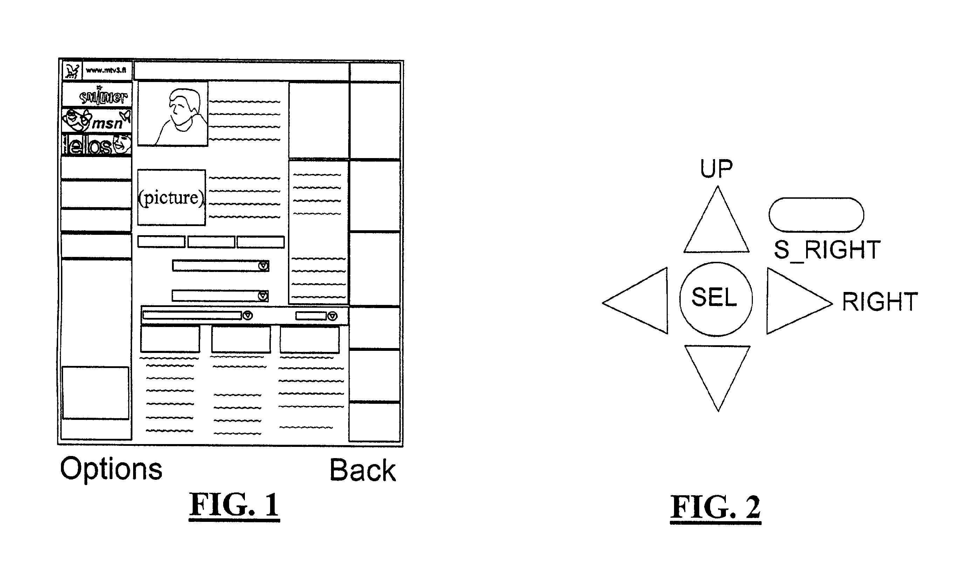

Fig. 1 shows the display of graphical information using a web browser on a display of an electronic device sized for hand-held use. The display provides the image in a window having an extent limited by the size of the electronic device. For instance, Fig. 1 shows a display of graphical information from a web page on a display providing an image having a window that is capable of displaying detail with the resolution of 176 by 188 (176 by 208 with soft key texts). Given that the graphical information contained in the web page will normally have a resolution available over its full extent of much more than 176 by 188, e.g., 1152 by 864 pixels, 1024 by 768 pixels, 800 by 600 pixels, 640 by 480 pixels, 1280 by 1024 pixels, or the like, it will be evident that the full extent of the graphical information available cannot be displayed, given the resolution available on the display of the electronic device sized for hand-held use. The image in the window of such a display has its extent limited by the size of the electronic device and by the resolution available in the imaging window. Even if the small-sized display were capable of such high resolution, such resolution would not be resolvable by the human eye over a window of such small extent. A typical hand-held device has a display of only a few centimeters on a side while the normal viewing screen for a web page is a desktop display with an extent that is much greater.

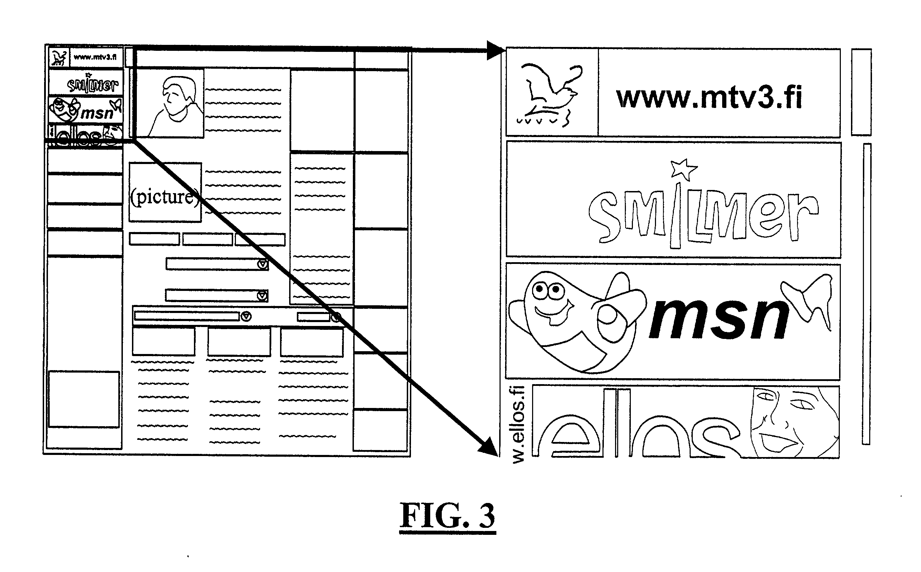

According to the present invention, such web pages are chosen by the user and displayed on the display of the hand-held device scaled to fit the display. As shown in Fig. 1, the size of the web page is so small that almost no text can be read by the user, but the overall appearance can be seen. Even though the graphical information of the web page has an extent greater than resolvably displayable at once on the limited extent of the low-resolution display of the hand-held device, it is none the less made displayable by reducing the resolution thereof over the whole extent of the graphical information. This reduction in resolution can be accomplished in any desired way such as by selecting every tenth pixel, by averaging pixel groups such as macroblocks of 16 pixels each (4 x 4), or the like. Once the us1Xer has a view of the whole extent of the graphical information albeit at reduced resolution, the user is then able to use an input device such as shown in Fig. 2 to input a windowing signal to choose a portion of the full extent of the graphical information to view. The user actuates the input device of Fig. 2 and a windowing signal is then provided that has a magnitude indicative of a selected whole or portion of the extent of the available graphical information in the web page. If the selected portion is smaller than the full extent of the available graphical information, then a portion of the extent of the graphical information is displayed on the limited extent window such is shown in Fig. 3 where a small window at the upper left hand corner of the web page is displayed as an image on the limited extent window. As mentioned above, the graphical information has a given resolution available over an extent greater than displayable at once on the limited extent window of the hand-held device. However, with this windowing technique, a portion of the extent of the graphical information is displayed at a resolution available in the window of the limited extent display of the hand-held device at a resolution that makes the graphical information in the portion selected readable even though the resolution may still be less than the resolution inherently available in the graphical information. It will be realized that it is possible to make the resolution available in the limited extent window equal to the resolution inherently available in the graphical information by choosing a window size that exactly matches the resolution of the inherent graphical information. In other words, the selected portion of the graphical information would include 176 by 188 pixels so that each pixel available in the selected portion equals the resolution available in the image in the window of the limited-extent display.

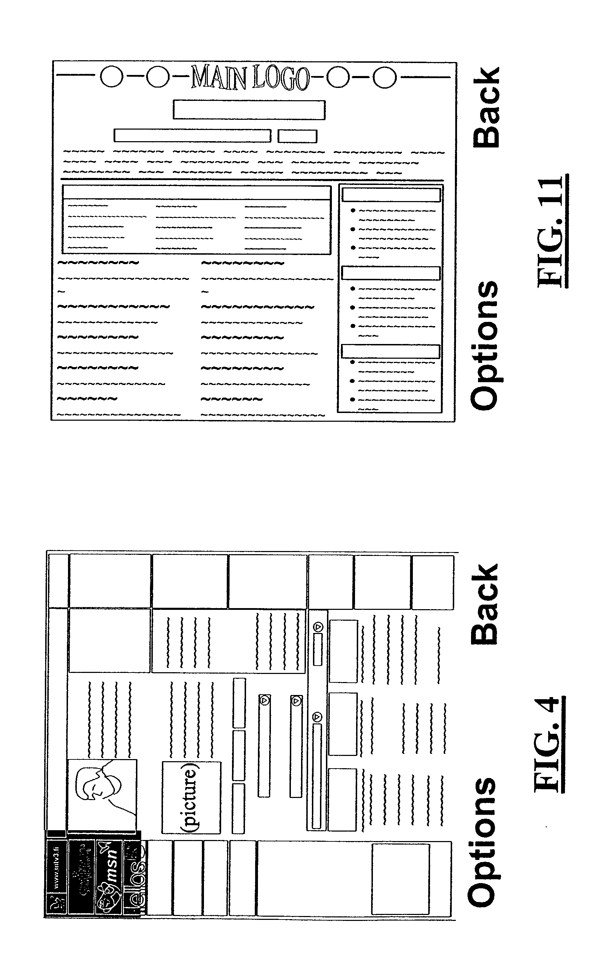

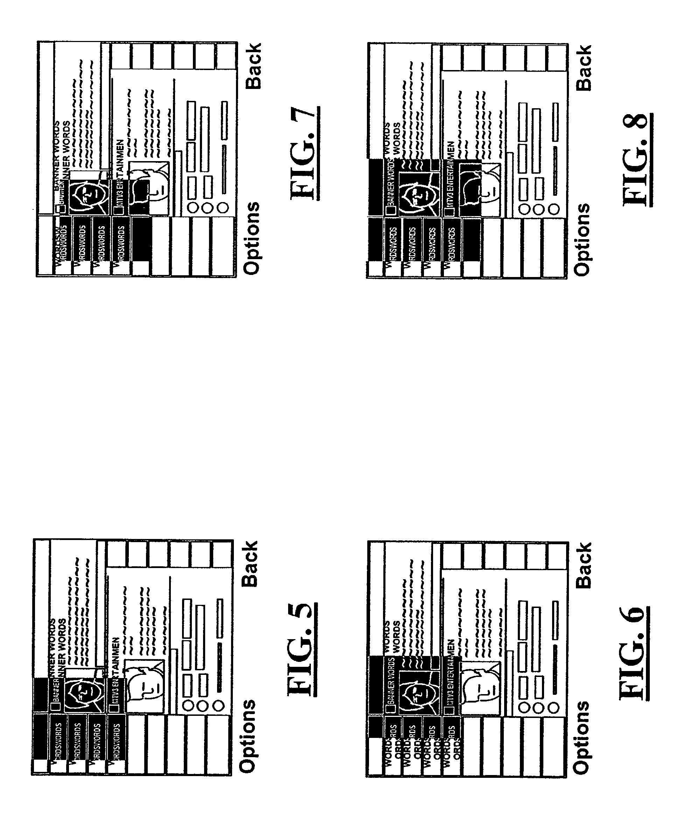

Referring back to Fig. 2, up and down arrow keys or buttons will be used to move the page up and down if all of it is not visible. A press of the select-key (SEL) will show the selection area. This area can be shown, e.g., by having a frame around it as in Fig. 3 or inverting it as in Figs. 4 or 5. Notice that the area selected in Fig. 5 is larger than that selected in Fig. 4. This can be done by hitting the select key again to enlarge the selection area. The select key will then toggle between the full-page view and the enlarged view, or variations thereof.

The selection area can be moved with the up, down, left and right buttons. For instance, the selection key can move the area by a quarter area of the current selection's area width or height at every press of the button. Fig. 6 shows the selection area of Fig. 5 moved one step right. Fig. 7 shows the selection area moved one step down.

When the portion of the full page is enlarged on the display, such as shown on the right hand side of Fig. 3, the arrow keys may be used to move the detailed view in a manner similar to that described above. By trying to move the enlarged view down to a non-visible area of the full page view will cause also the full page picture to move so that the user cannot move beyond the full extent of the graphical information available. A similar thing will happen when moving up or the left or right edge.

As a default, the selection area would depend on the resolution of the original page and the resolution of the display. However, the user can define the size of the selection area by using a View Area tool in an Options Menu. This area can be dynamically adjusted. The size of the selection can be changed in steps.

Since Internet pages are designed for different PC display widths, as indicated above, it might be necessary to have a manual setting for setting same in the Options Menu. Fig. 8 for instance shows the same web page as shown above with the selection area increased one step.

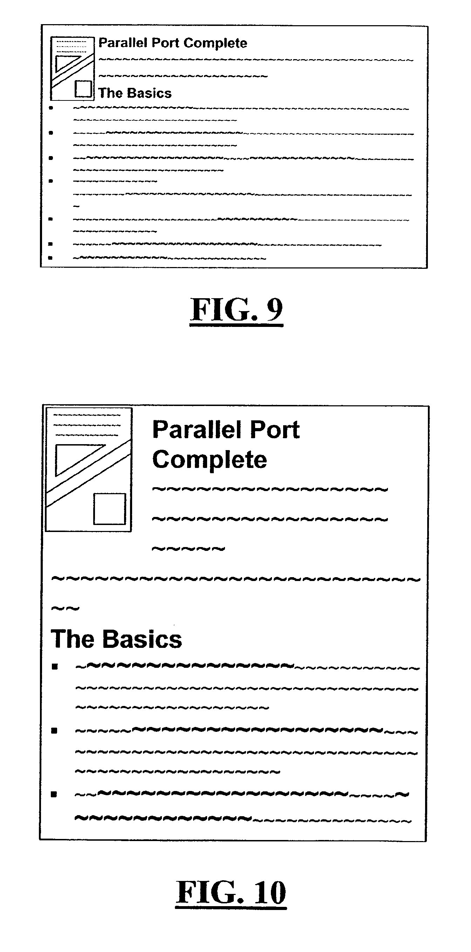

Regarding the display of columns of information available from the graphical information, for instance in a web page, web browser software can be used to adjust column width using the capability of HTML, where pages are formed depending on the browser window size. This feature makes web pages more readable on the limited extent window of the hand-held device display because the text can be fitted into one screen of the low-resolution display. Fig. 9 shows in practice how such a web browser can handle differences in window size. Fig. 9 shows a web page viewed in a wide window (176 by 130) while Fig. 10 shows the same web page viewed in a narrow window (176 by 208). As seen in Fig. 10, any zoom capability is hardly needed. The text is more user-friendly to read when all the text columns are fitted in the one screen.

In regard to selecting links to other Internet pages, with an enlarged (approximately 1:1) screen, the user can activate Select Links mode from the Options Menu. In this mode, all links contained in an Internet page can be selected one by one. The pointed-to link can be indicated for example by using a jumping pointer, inverting it or by shading it. The up, down, right and left buttons will jump the "pointer" to the next link in that direction. If there is no link visible, the next enlarged view is automatically loaded to the screen and the next link is pointed to there.

Optionally, the Select Links mode is able to activate the visual pointer, e.g., an arrowhead on the display. Then the pointer movement and link activation can be done in a similar way as currently done on browsers for desktop PCs. On the other hand, instead of having the pointer move, the pointer can be made visible situated for instance in the center of the window in a stationary way every time a link comes next to, over, under, near or otherwise in its close or near vicinity. It is well known for a user to move an indicator such as an arrow onto a hyperlink and "actuate" it by "clicking" on it by means of a mouse button or other input device. The links are recognizable on a web page because they look different. Typically they're blue and underlined. The hyperlink can be activated when the pointer is apparently "touching" the link or is otherwise in its close or near vicinity. Using the inventive concept, the arrow can be made stationary as the graphical information moves or otherwise scrolls vertically, horizontally or at an angle past the stationary pointer. Such a stationary arrow pointer is shown in about the center of Fig. 10. The arrow pointer has been made visible because it is near a link "parallel port complete". The link can be moved so as to be positioned under the tip of the arrow by scrolling the graphical information, using the down arrow of Fig. 2. In this way, hyperlinks can be positioned for selection from a web page by scrolling or moving the graphical information within the window (or zoomed window) so that the link is positioned under the arrow in the middle. Instead of suddenly making the pointer visible, it could be that the pointer would change pointer shape or color or that the link color would change to indicate that a selection key could be used to activate the link instead of some other function such as toggling the zoom which would otherwise be operative. It will be realized that in a prior art PC the mouse pointer is moved to the link but in this case the link is moved under the pointer or otherwise in its close or near vicinity. As mentioned above, the pointer can be made visible only when there is a selectable link near the center of the display.

When the portion of the full page is enlarged on the display, such as shown on the right hand side of Fig. 3, the arrow keys may be selectively used to move the detailed view shown within the window with fine granularity. In other words, the small area selected can be shifted by a small amount so as to be able to precisely move a hyperlink into position under the above mentioned stationary pointer so that it can be selected by the user and the hyperlink can be "clicked" or otherwise actuated. The user can thereby exercise the option to hyperlink to other sites using this new methodology. Besides being useful for positioning the hyperlinks under the stationary pointer or indicator, this feature is also useful for general scrolling purposes both vertically and horizontally or some combination thereof, i.e., angularly.

The Option Menu can also be provided with other functions such as multimedia controls. On the other hand, the user can choose for example a text only mode, when no pictures are shown. The Options Menu should but need not include the following options: (1) Select Links which activates link selection mode, (2) New Address which gives a text box for entering a new address, (3) Text Only which activates a mode in which the browser shows only text, and (4) View Size in which an adjustment for the view size is provided.

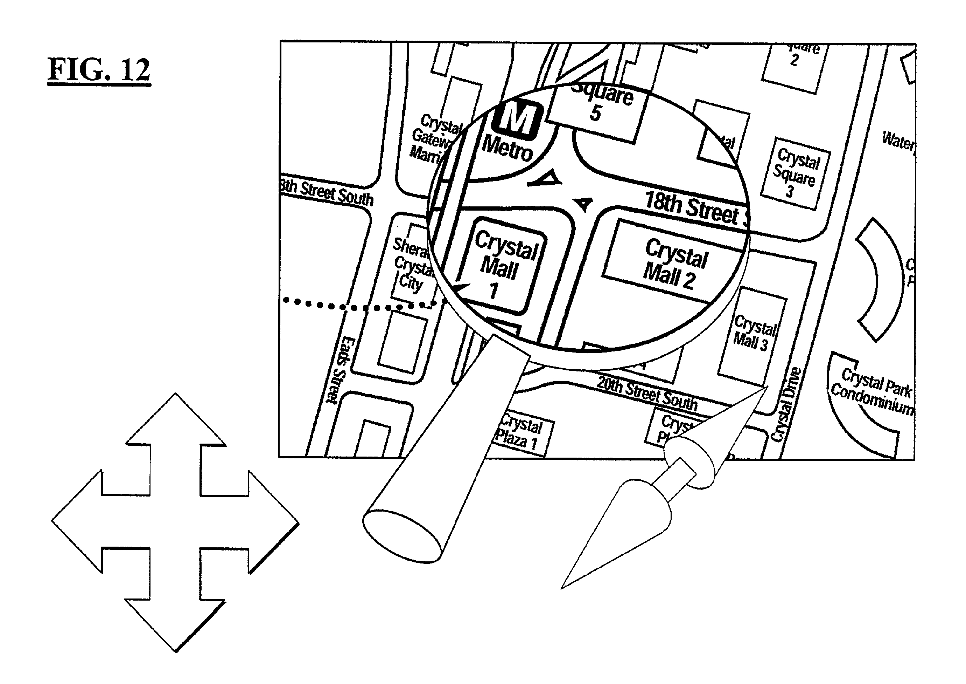

Many other actions can be envisioned such as shown in Fig. 11 wherein a page is fitted to a display by rotating it 90 degrees. The example of Fig. 10 shows a web page with a resolution of 176 by 196. Such a rotation might make a web page easier to read by rotating the electronic device.

It should be realized that there are other methods for allowing the user to provide an input other than the buttons shown in Fig. 2 or the joystick or rollers suggested above. Another approach would be to equip the hand-held electronic device with a sensor or sensors to sense the viewer input in the form of moving the hand-held electronic device itself in a direction indicative of a desired view window, magnification or both. There is various types of sensors that could be used:
1) Sensors that detect movement; magnetic sensor, accelometer (see e.g., U.S. 5,615,132), gyroscope (mechanical or optical), radio (see e.g., U.S. 6,204,813 or U.S. 6,054,951);
2) Sensors that detect objects around and then calculates the actual movement: Proximity (sound, light), camera with image recognition (see e.g., U.S. 6,195,455 or 5,729,475);
3) Tag based systems, where sensors detect fixed tags on enviroment and calculate the actual movement, by the location of tags. (e.g. BLUETOOTH type of devices where there can be many BT devices in a room and most of them are fixed, like printers or projectors);
4) Control could be also by user voice commands.
   Optimum solution is probably some combination of gesture recognition sensors and user actuated input devices.

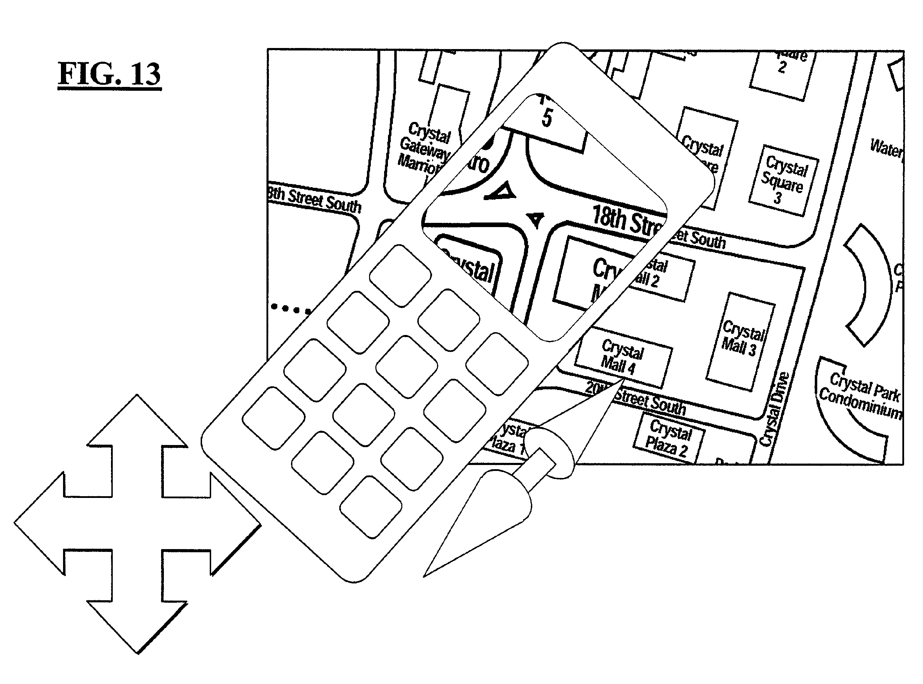

Fig. 12 shows graphical information in the form of a real street map which may have details over its full extent which are quite detailed and not easily seen without the aid of a magnifying glass. To choose a portion of the street map to view in more detail, the user will move the magnifying glass over a selected portion of the full extent of the street map. This is done by moving the magnifying glass left or right or toward the user or away from the user. To change the magnification, the user moves the magnifying glass closer to the map or farther away. Such a scenario can be imitated according to the present invention as shown in Fig. 13. In the scenario shown in Fig. 13, the same street map is available not as a real map but as graphical information stored in a selected graphical format in a computer readable medium such as a read only memory, random access memory or small hard drive incorporated in the hand-held electronic device shown in Fig. 13. Nonetheless the user can be induced to perceive the map reading experience in a manner similar to the experience of Fig. 12. Although the user can only see what is displayed on the low-resolution display of the hand-held electronic device and not the nondisplayed areas around the periphery of the area-of-interest, Fig. 13 suggests a scenario similar to the real situation depicted in Fig. 12. The user will be able to navigate the stored graphical information by moving the hand-held electronic device of Fig. 13 in a manner similar to the way the user of the magnifying glass of Fig. 12 would move the magnifying glass to view selected portions of the real map and to view details thereof by moving the magnifying glass closer to the map or farther away to see greater detail or lesser detail with corresponding lesser and greater fields of view.
If accelerometers are used to sense movement, high pass and low pass filter algorithms can be performed on the accelometer data to determine the direction where the 1G is (earth gravity), and the movement (which direction) that user has caused to device to move in.

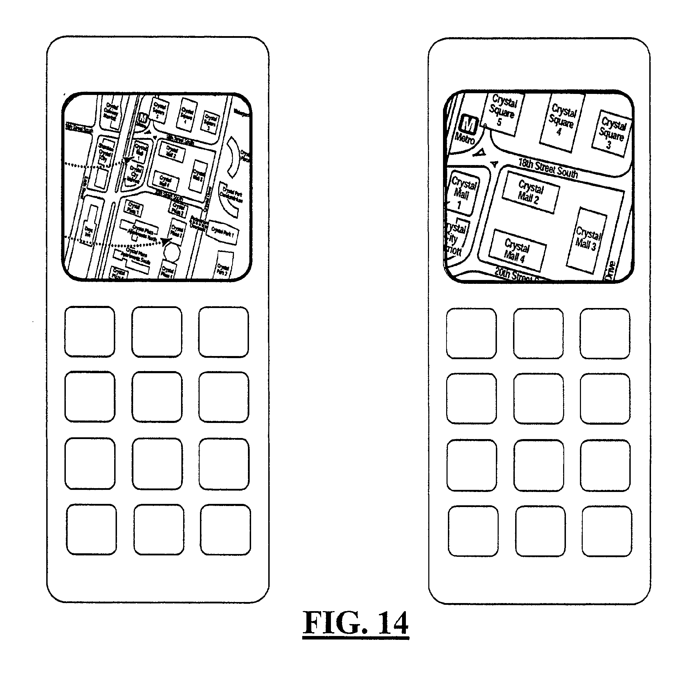

Thus, the sensors of Fig. 13 could be equipped in such a way as to be able to sense three axes of movement: forward and backward, up and down, left and right. If accelerometers are used to sense movement, it may not be deemed necessary in some implementations to sense rotational degrees of freedom but such could be sensed as well, if desired, to add even more verisimilitude to the process. In that case, six axes would be sensed, not only the three orthogonal translational degrees of freedom but also rotations about each axis. The center of the coordinate system could be chosen to be at the center of the low-resolution display. In that case, the accelerometers would be physically mounted within the electronic device under the display. As shown in Fig. 13, the selected part of the full extent of the available graphical information constituting the street map is only shown on the low-resolution display according to user movements. The user has multiple ways to access data on the screen. The user may move the hand-held device left or right or farther away or closer to the user to look at a portion of the full extent of the graphical information available. The user may even look at the whole extent of the graphical information by raising the device higher such as shown in the left hand side of Fig. 14 where the full extent of the street map is shown with major arteries visible but residential streets not viewable. With a combination of left and right movements, toward and away movements and up and down movements, the user can navigate within the full extent of the graphical information to locate details for close viewing such as shown on the right hand side of Fig. 14. It is a very intuitive process and can be quite easily learned.

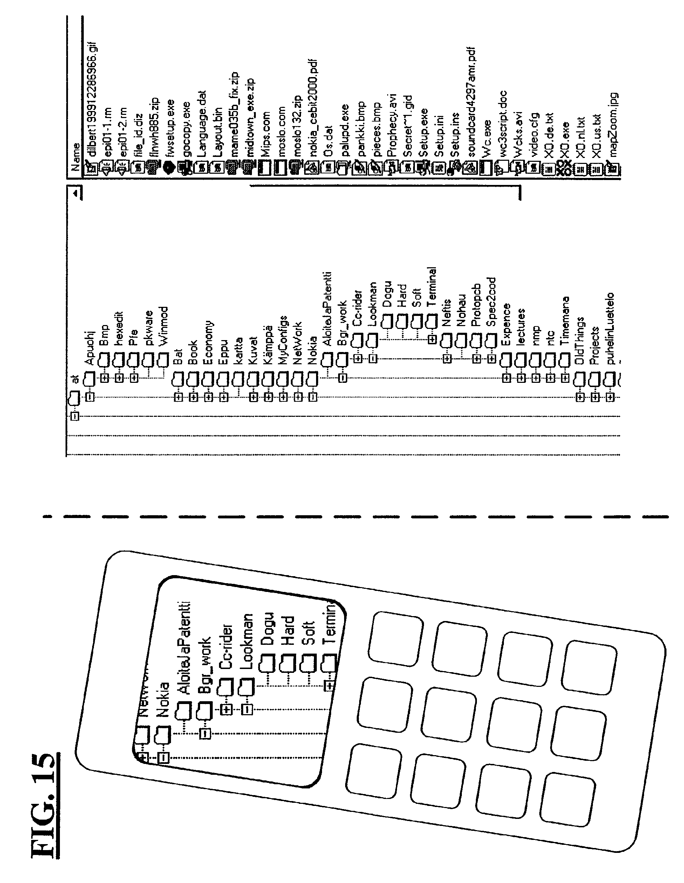

There are of course other applications besides graphical information in the form of street maps or the like. For instance, Fig. 15 shows a directory structure for information stored in a computer readable medium such as a miniature hard drive within the hand-held electronic device of Fig. 15 or within his personal computer at home which the user is accessing through a wired or wireless connection. By moving the hand-held electronic device of Fig. 15 in the manner previously disclosed in connection with Fig. 13, the user can navigate within the directory structure by simply moving the hand-held electronic device. The accelerometers will sense the change in velocity and translate same into positional changes by a double integration of the sensed change in velocity or low pass filtering. In this way, positional movements of the hand-held device become readily adapted to a navigational tool for use on navigating graphical information displayed at low resolution on displays of hand-held electronic devices.

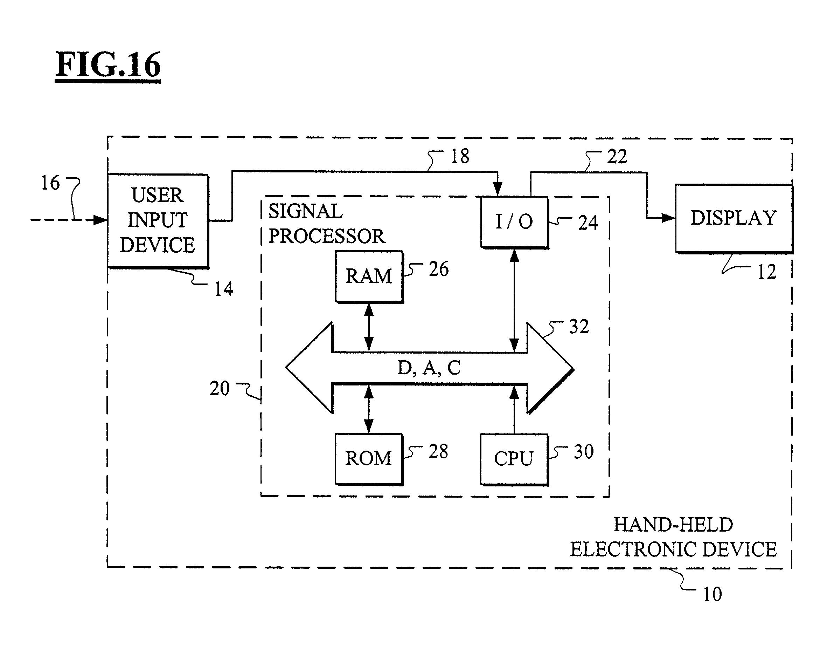

Fig. 16 shows a hand-held electronic device 10, according to the present invention, having a low-resolution display for displaying graphical information. The display has a window for providing an image having an extent limited by the size of the electronic device. According to the invention, the device 10 includes one or more user input devices 14 such as the control buttons of Fig. 2, keys, rollers, joysticks, the n-axis accelerometers described in connection with Figs. 13-15, or like position/movement detection systems including various combinations thereof. A user input is signified by a user input line 16 actuating the user input device 14. In response to the user input on the line 16, the user input device 14 provides a windowing signal on a line 18 having a magnitude indicative of a selected whole or portion of the full extent of the graphical information to be displayed on the imaging window of the low-resolution display. Or, it could be indicative of a level of detail desired by the user. Or, it could be both or a combination of both. A signal processor 20 is responsive to the windowing signal on the line 18 for processing that signal and providing an output display signal on a line 22 to the display 12. The signal processor 20 may be a conventional signal processor including an input/output (I/O) device, a random access memory (RAM) 26, a read only memory (ROM) 28, a central processing unit (CPU) 30 and other (not shown) devices such as a small hard drive all interconnected by data, address and control (D, A, C) busses 32. Such a signal processor is well known in the art and will be capable of providing a graphics adapter function for carrying out the various functionalities described herein. Essentially, it will determine what portion or level of detail (or both) is indicated by the user input signal and cause that portion to be retrieved for display. Of course, the hand-held device 10 will include other devices associated with its basic functionalities. For instance, if the hand-held electronic device constitutes a mobile telephone, it will include the necessary constituent elements to provide such functionality such as an antenna with a duplexer, coders/decoders and other devices known in the art of mobile telecommunications. If the device, on the other hand, is a personal digital assistant, it may include sophisticated personal digital assistance software which is unrelated to the present invention and which need not be shown here. Or such could be combined.

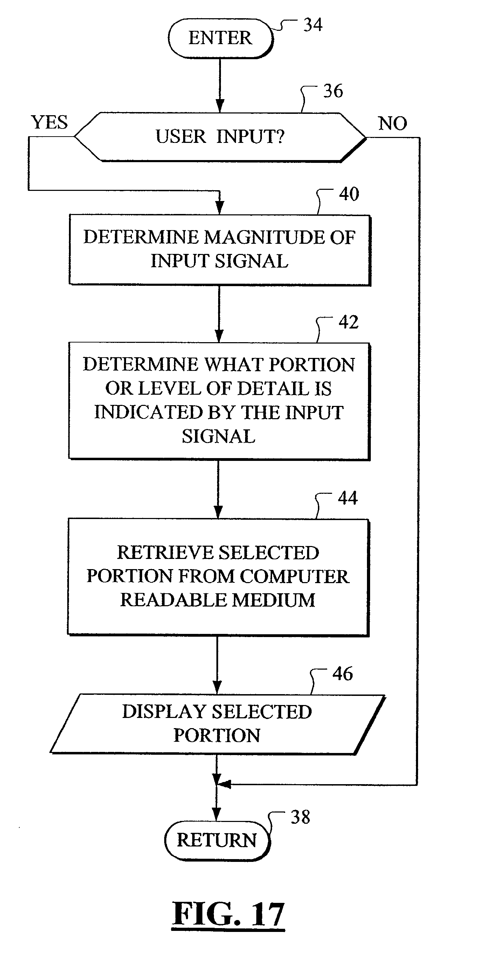

Fig. 17 shows an example of a program that can be encoded and stored in a computer readable medium such as the read only memory (ROM) 28 of Fig. 16 residing in the signal processor 20 of the hand-held electronic device 10. The flow chart shown in Fig. 17 can be implemented as a subroutine that is executed periodically, e.g., every 100 milliseconds. Faster or slower benchmarks can be selected as the need may be. After entering in a step 34, a decision is made in a step 36 as to whether there is a user input present. If not, a return is made in a step 38 and the subroutine is not executed again until the next 100 millisecond benchmark occurs.

If a user input is present, a step 40 is executed to determine the magnitude thereof. Once that is determined, the signal processor 20 determines what portion of the graphical information or what level of detail is indicated by the input signal. A selected portion from the full extent graphical information is then retrieved from the computer readable medium, as indicated by a step 44. The signal processor 20 then provides an output signal on a line 22 which causes the display 12 to display the selected portion and/or level of detail. A return is then made in the step 38 and the subroutine can be executed again at the next 100 millisecond benchmark.

Although the invention has been shown and described with respect to a best mode embodiment thereof, it should be understood by those skilled in the art that the foregoing and various other changes, omissions and additions in the form and detail thereof may be made therein without departing from the spirit and scope of the invention.

Graphical information having a full extent not displayable at once on a low-resolution display of a hand-held electronic device is displayed over a limited extent thereof at a variable resolution less than or equal to the highest resolution inherently available within the graphical information. The varying portion of the full image to be displayed is selected by a user windowing signal actuated by a user input device such as a button, roller, joystick or by simply moving the hand-held electronic device in space and having that movement sensed by a sensor such as an accelerometer.

## Claims

1. Method for displaying graphical information on a display of an electronic device sized for hand-held use, said display providing an image in a window having an extent limited by the size of the electronic device, comprising the steps of:
receiving an input windowing signal actuated by a user of said electronic device, said windowing signal having a magnitude indicative of a selected whole or portion of an extent of said graphical information greater than displayable at once as said image over said limited extent of said window, and
displaying said selected whole or portion of said extent of said graphical information on said limited extent window, in response to said user actuated input windowing signal.

2. The method of claim 1, wherein said graphical information has a given resolution available over said extent of said graphical information and wherein said step of displaying said whole or portion of said extent of said graphical information is at a resolution less than or equal to said given resolution.

3. The method of claim 1, further comprising the steps of:
receiving an input zoom signal actuated by said user of said electronic device, said input zoom signal having a magnitude indicative of a selected level of resolution, wherein said graphical information has a given resolution available over said extent of said graphical information greater than displayable at once in said window, and
displaying said selected level of resolution over a portion of said extent of said graphical information.

4. The method of claim 1, wherein said input windowing signal is provided in response to said user actuating a finger- or hand-actuated control device associated with said electronic device.

5. The method of claim 4, wherein said control device includes one or more finger-actuatable buttons or keys.

6. The method of claim 4, wherein said control device includes one or more finger-actuatable rollers.

7. The method of claim 4, wherein said control devices includes one or more joysticks.

8. The method of claim 1, wherein said input windowing signal is provided in response to said user moving said electronic device.

9. The method of claim 8, wherein said moving includes moving said device with changing velocity.

10. The method of claim 8, wherein said moving includes moving said device with respect to a magnetic field.

11. The method of claim 8, wherein said moving includes moving with respect to sensible objects.

12. The method of claim 2, wherein said input windowing signal is provided in response to said user moving said electronic device.

13. The method of claim 12, wherein said moving includes moving said device with changing velocity.

14. The method of claim 3, wherein said input zoom signal is provided in response to said user moving said electronic device.

15. The method of claim 14, wherein said moving includes moving said device with changing velocity.

16. The method of claim 1, further comprising the step of displaying a stationary pointer on said limited extent window for use in selecting a link in its vicinity.

17. The method of claim 16, further comprising the step of receiving a user entered link selection signal for said selecting a link.

18. The method of claim 16, wherein said step of displaying comprises the step of changing a color or shape of said stationary pointer when in said vicinity of said link.

19. The method of claim 16, wherein said step of displaying is carried out only when link is positioned in said vicinity of said stationary pointer.

20. The method of claim 16, wherein said stationary pointer is positioned in a central position within said limited extent window.

21. Method for displaying graphical information on a limited extent display of a hand-holdable electronic device, comprising the steps of:
receiving inputs actuated by a user to indicate various selected levels of detail, wherein said graphical information has a level of detail over an extent greater than displayable at said level of detail over said limited extent display with a greatest level of detail available in said display, and
displaying said graphical information, in response to said inputs actuated by said user, in said various selected levels of detail over an increasingly lesser extent of said extent of said graphical information with increasingly greater levels of detail of said graphical information.

22. The method of claim 21, wherein said inputs actuated by said user comprise actuation of a finger-actuatable control device associated with said hand-holdable electronic device.

23. The method of claim 22, wherein said control device includes one or more buttons or keys.

24. The method of claim 22, wherein said control device includes one or more rollers.

25. The method of claim 22, wherein said control device includes one or more joysticks.

26. The method of claim 21, wherein said inputs actuated by said user include moving said hand-holdable electronic device.

27. The method of claim 26, wherein said moving includes the step of moving said hand-holdable device with changing velocity.

28. The method of claim 21, further comprising the step of displaying a stationary pointer on said limited extent display for use in selecting a link in its vicinity.

29. The method of claim 28, further comprising the step of receiving a user entered link selection signal for selecting a link.

30. The method of claim 28, wherein said step of displaying comprises the step of changing a color or shape of said stationary pointer when in said vicinity of said link.

31. The method of claim 28, wherein said step of displaying is carried out only when link is positioned in said vicinity of said stationary pointer.

32. The method of claim 28, wherein said stationary pointer is positioned in a central position within said limited extent window.

33. Apparatus for displaying graphical information on a display of an electronic device sized for hand-held use, said display providing an image in a window having an extent limited by the size of the electronic device, comprising:
a user input device actuated by a user of said electronic device for providing a windowing signal having a magnitude indicative of a selected whole or portion of an extent of said graphical information greater than displayable at once as said image over said limited extent of said window, and
a signal processor, responsive to said windowing signal, for providing a display signal for displaying said selected whole or portion of said extent of said graphical information on said limited extent window.

34. The apparatus of claim 33, wherein said graphical information has a given resolution available over said extent of said graphical information and wherein said signal for displaying said selected whole or portion of said extent of said graphical information is at a resolution less than or equal to said given resolution.

35. The apparatus of claim 33, wherein said user input device actuated by said user of said electronic device is also for providing an input zoom signal having a magnitude indicative of a selected level of resolution, wherein said graphical information has a given resolution available over said extent of said graphical information greater than displayable at once in said window, and wherein said signal for displaying is also for displaying said selected level of resolution over said selected whole or portion of said extent of said graphical information.

36. The apparatus of claim 33, wherein said input windowing signal is provided in response to said user actuating a finger- or hand-actuated user input device.

37. The apparatus of claim 36, wherein said user input device includes one or more finger-actuatable buttons or keys.

38. The apparatus of claim 36, wherein said user input device includes one or more finger-actuatable rollers.

39. The apparatus of claim 36, wherein said user input devices includes one or more joysticks.

40. The apparatus of claim 33, wherein said input windowing signal is provided in response to said user moving said electronic device.

41. The apparatus of claim 40, wherein said moving includes moving said electronic device with changing velocity.

42. The apparatus of claim 34, wherein said input windowing signal is provided in response to said user moving said electronic device.

43. The apparatus of claim 42, wherein said moving includes moving said electronic device with changing velocity.

44. The apparatus of claim 35, wherein said input zoom signal is provided in response to said user moving said electronic device.

45. The apparatus of claim 44, wherein said moving includes moving said electronic device with changing velocity.

46. The apparatus of claim 33, wherein said signal processor is responsive to positioning of a hyperlink within said limited extent window for displaying a user actuatable pointer at a selected position within said limited extent window when said hyperlink is positioned at said selected p within said limited extent window.

47. The apparatus of claim 33, further comprising the step of receiving a user entered link selection signal for selecting a link.

48. The apparatus of claim 47, wherein said step of displaying comprises the step of changing a color or shape of said stationary pointer when in said vicinity of said link.

49. The apparatus of claim 47, wherein said step of displaying is carried out only when link is positioned in said vicinity of said stationary pointer.

50. The apparatus of claim 47, wherein said stationary pointer is positioned in a central position within said limited extent window.

51. Apparatus for displaying graphical information on a limited extent display of a hand-holdable electronic device, comprising:
means for receiving inputs actuated by a user for providing a user input signal having a magnitude indicative of various selected levels of detail, wherein said graphical information has a level of detail over an extent greater than displayable at said level of detail over said limited extent display with a greatest level of detail available in said display, and
means responsive to said user input signal, for providing a display signal for displaying said graphical information in said various selected levels of detail over an increasingly lesser extent of said extent of said graphical information with increasingly greater levels of detail of said graphical information.

52. The apparatus of claim 51, wherein said inputs actuated by said user comprise actuation of a finger-actuatable means for receiving user inputs.

53. The apparatus of claim 52, wherein said means for receiving user inputs includes one or more buttons or keys.

54. The apparatus of claim 52, wherein said means for receiving user inputs includes one or more rollers.

55. The apparatus of claim 52, wherein said means for receiving user inputs includes one or more joysticks.

56. The apparatus of claim 51, wherein said inputs actuated by said user include moving said hand-holdable electronic device.

57. The apparatus of claim 56, wherein said moving includes the step of moving said hand-holdable device with changing velocity.

58. The apparatus of claim 51, wherein said means responsive to said user input signal is also responsive to positioning of a hyperlink within said limited extent display for displaying a user actuatable pointer at a selected position within said limited extent display when said hyperlink is positioned at said selected position within said limited extent display.

59. The apparatus of claim 51, further comprising the step of receiving a user entered link selection signal for selecting a link.

60. The apparatus of claim 59, wherein said step of displaying comprises the step of changing a color or shape of said stationary pointer when in said vicinity of said link.

61. The apparatus of claim 59, wherein said step of displaying is carried out only when link is positioned in said vicinity of said stationary pointer.

62. The apparatus of claim 59, wherein said stationary pointer is positioned in a central position within said limited extent window.
